# EUROPÄISCHE PATENTSCHRIFT

(11) **EP 4 077 971 B1**
(45) Veröffentlichungstag und Bekanntmachung des Hinweises auf die Patenterteilung: **02.12.2026**
(21) Anmeldenummer: 20838960.1
(22) Anmeldetag: 18.12.2020
(51) Int. Cl.: F16G 13/16

(54) **FÜHRUNGSELEMENTE ZUSAMMEN MIT EINER ENERGIEFÜHRUNGSKETTE UND SPEICHEREINHEIT FÜR EINE ENERGIEFÜHRUNGSKETTE**
GUIDES TOGETHER WITH AN ENERGY CHAIN AND STORE UNIT FOR AN ENERGY CHAIN
GUIDE ENSEMBLE AVEC CHAÎNE PORTE-CÂBLES ET UNITÉ DE STOCKAGE POUR UNE CHAÎNE PORTE-CÂBLES

(30) Priorität: 19.12.2019 DE 202019107116 U
(43) Veröffentlichungstag der Anmeldung: 26.10.2022
(73) Patentinhaber: igus SE & Co. KG, 51147 Köln (DE)
(72) Erfinder: DOMMNIK, Jörg, 53819 Neunkirchen-Seelscheid (DE); MORITZ, Simon, 50996 Köln (DE)
(74) Vertreter: Lippert Stachow Patentanwälte Rechtsanwälte
(86) Internationale Anmeldenummer: PCT/EP2020/087110
(87) Internationale Veröffentlichungsnummer: WO 2021/123231

(56) Entgegenhaltungen:
- WO-A1-2014/205464
- WO-A1-2017/046545
- US-B1- 7 552 581

## Beschreibung

Die Erfindung betrifft eine Energieführungskette zur Aufnahme und Führung von Energie- und/oder Kommunikationsleitungen, die verschwenkbar in Längsrichtung aneinander anschließende Kettenglieder aufweist, wobei die Kettenglieder jeweils zwei in einer Querrichtung zur Längsrichtung gegenüberliegende Seitenteile umfassen und zumindest einige der Kettenglieder ihre Seitenteile verbindende Traversen aufweisen, wobei die Energieführungskette mehrere Abschnitte einschließt, die jeweils in Form von zwei durch einen sich um einen Umlenkbogen erstreckenden Umlenkbereich miteinander verbundenen Trumen angeordnet sind.

Die vorliegende Erfindung betrifft weiterhin eine Speichereinheit mit einem Speichergehäuse und einer darin anordenbaren, in Form einer Spirale gewickelten Energieführungskette der vorstehend genannten Art, sowie eine Speichereinheit mit einem Speichergehäuse für eine darin anordenbare, in Form einer Spirale wickelbare Energieführungskette der vorstehend genannten Art.

Eine Energieführungskette der oben genannten Art sowie eine Speichereinheit mit einem Speichergehäuse und einer solchen Energieführungskette ist aus der US 7 552 581 B1 bekannt. Die in einem Speichergehäuse der Speichereinheit angeordnete Energieführungskette ist in Form mehrerer Schleifen im Speichergehäuse abgelegt. Der Umlenkbereich der sich an einen festen Anschlusspunkt anschließenden Schleife ist an seiner Innenseite mit einer an den Umlenkbogen angepassten Blattfeder versehen. Wird die Energieführungskette mit ihrem beweglichen Anschlusspunkt aus ihrer gefalteten Speicherposition senkrecht zu den Trumen der Schleifen weggezogen, faltet sie sich in ihren nicht weiter stabilisierten Umlenkbögen auf, wobei der die Blattfeder aufweisende Umlenkbereich gegen die Federwirkung der Blattfeder aufgespreizt wird.

Aus der WO 2017/046545 A1 ist eine Lagervorrichtung für ein rollbares Element bekannt, das mehrere Abschnitte einschließt, die jeweils in Form von zwei durch einen sich um einen Umlenkbogen erstreckenden Umlenkbereich miteinander verbundenen Trumen angeordnet sind, wobei das rollbare Element um den Umlenkbogen verfahrbar ist. Jeder Umlenkbereich der mehreren Abschnitte ist an seiner Innenseite durch ein sich bogenförmig um die jeweilige Achse des Umlenkbogens erstreckendes Führungselement geführt. Das rollbare Element ist in Form einer Spirale mit zwei voneinander beabstandeten Wickelachsen angeordnet, um die sich jeweils mehrere Umlenkbögen der Umlenkbereiche des rollbaren Elements erstrecken. Die die Umlenkbereiche an ihren Innenseiten abstützenden und führenden, jeweils einer Wickelachse zugeordneten Führungselemente sind an zwei Platten angeordnet, die in einem Abstand voneinander angeordnet und durch eine Druckfeder miteinander verbunden sind. Vermöge der Druckfeder werden die gegenüberliegenden
Umlenkbereiche bei Zugbeanspruchung des rollbaren Elements an die an ihren Innenseiten angeordneten Führungselemente angedrückt und unter einer zwischen den Umlenkbereichen und den Führungselementen wirkenden Reibungskraft durch die Führungselemente geführt. Der vorliegenden Erfindung liegt die Aufgabe zugrunde, eine mehrere Abschnitte der vorstehend genannten Art einschließende Energieführungskette bereitzustellen, die kompakter gespeichert und mit möglichst wenig Reibung um die Umlenkbögen der Umlenkbereiche verfahren werden kann, wobei die Umlenkbögen einer Stabilisierung unterworfen werden können.

Die Aufgabe wird erfindungsgemäß dadurch gelöst, dass die Energieführungskette um den Umlenkbogen verfahrbar ist jeder Umlenkbereich der mehreren Abschnitte an seiner Innenseite und seiner Außenseite durch sich bogenförmig um die jeweilige Achse des Umlenkbogens erstreckende Führungselemente geführt ist.

Unter der Innenseite des Umlenkbereichs wird die zur Achse des zugehörigen Umlenkbogens hin weisende Seite und unter der Außenseite des Umlenkbereichs wird die von der Achse des zugehörigen Umlenkbogens weg weisende Seite des Umlenkbereichs verstanden.

Die Führung der Energieführungskette im Umlenkbereich durch die Führungselemente kann durch Gleitführung erfolgen.

Bevorzugt erstrecken sich die Führungselemente bogenförmig an der Innenseite und an der Außenseite über den gesamten jeweiligen Umlenkbereich.

Die Führungselemente können sich auch über den Umlenkbereich hinaus über einen sich daran anschließenden Bereich des einen und/oder anderen sich an den Umlenkbereich anschließenden Trums erstrecken.

Die sich an der Innenseite und/oder der Außenseite des Umlenkbereichs erstreckenden Führungselemente können sich über die gesamte Breite in Querrichtung q des Umlenkbereichs erstrecken.

Die Führungselemente können bandförmig ausgebildet sich kreisbogenförmig an der Innenseite und/oder der Außenseite des Umlenkbereichs erstrecken.

Die Führungselemente können jedoch auch durch Kulissen gebildet sein, die jeweils mit Wandbereichen den Umlenkbereich an seiner Innenseite und/oder Außenseite gleitend führen.

Benachbarte Kettenglieder der Energieführungskette können in einer Verschwenkrichtung durch Anschläge relativ zueinander begrenzt abwinkelbar sein, wodurch ein Minimalradius für die Umlenkbögen der Umlenkbereiche definiert wird. Weiterhin können sie in der anderen Verschwenkrichtung bis in ihre zueinander gestreckte Ausrichtung begrenzt abwinkelbar sein. Da benachbarte Kettenglieder in diesem Falle nicht über ihre zueinander gestreckte Ausrichtung verschwenkbar sind, wird insbesondere bei im Wesentlichen freitragende Trumen eine gerade Erstreckung derselben ermöglicht.

Zumindest einige der mehreren Abschnitte der Energieführungskette können miteinander über ein Trum oder beide Trume miteinander verbunden sein.

Die erfindungsgemäße Leitungsführung kann zum Beispiel in Form einer Endlosschleife mit zwei gegenüberliegenden Umlenkbereichen ausgebildet sein oder mehrere ineinander angeordnete Endlosschleifen mit jeweils zwei gegenüberliegenden Umlenkbereichen aufweisen. Die Achsen der Umlenkbögen der jeweils gegenüberliegenden Umlenkbereiche können in einem Abstand voneinander angeordnet sein. Bei mehreren ineinander angeordneten Endlosschleifen können die Umlenkbögen der Umlenkbereiche zwei im Abstand voneinander angeordnete Achsen aufweisen, um die die betreffenden Umlenkbereiche konzentrisch angeordnet sind.

Andererseits kann die Energieführungskette gewickelt in Form einer Spirale mit zwei voneinander beabstandeten Wickelachsen angeordnet sein, wobei die Umlenkbögen der Umlenkbereiche der Energieführungskette sich um die Wickelachsen erstrecken. Der Abstand zwischen den Wickelachsen kann beim Verfahren der Energieführungskette veränderbar sein.

Die Umlenkbögen der Umlenkbereiche, die sich um die gleiche Wickelachse erstrecken, können konzentrisch zueinander angeordnet sein.

Weiterhin können die Führungselemente für die Umlenkbereiche, deren Umlenkbögen sich um die gleiche Wickelachse erstrecken, konzentrisch zueinander angeordnet sein.

Die konzentrisch zueinander angeordneten Führungselemente können sich bandförmig zwischen den Umlenkbereichen erstrecken.

Die konzentrisch zueinander angeordneten Führungselemente können jedoch auch durch Wandbereiche einer Kulisse gebildet sein, die die sich um die jeweilige Wickelachse erstreckenden Umlenkbereiche an ihrer jeweiligen Innenseite und/oder Außenseite gleitend führt.

In einer bevorzugten Ausführung sind die konzentrisch zueinander angeordneten Führungselemente seitlich an einem plattenförmigen Teil angeordnet, das sich außenseitig parallel zu der Ebene der Umlenkbögen der Umlenkbereiche erstreckt. Die Innenseite des plattenförmigen Teils kann dabei als Gleitführung der Umlenkbereiche dienen.

Die Führungselemente können in einem Gehäuse angeordnet sein, das seitlich zwei plattenförmige Teile aufweist, die sich außenseitig parallel zu der Ebene der Umlenkbögen der Umlenkbereiche erstrecken und zwischen denen die Führungselemente angeordnet sind, wobei das Gehäuse zu den sich von den Umlenkbereichen aus erstreckenden Trumen hin offen ist. Die plattenförmigen Teile können als seitliche Gleitführung für die Umlenkbereiche dienen.

Das Gehäuse kann aus zwei Gehäuseschalen bestehen, deren Trennfläche in einer Ebene liegt, die sich parallel zu den Umlenkbögen der Umlenkbereiche erstreckt.

Die Erfindung betrifft weiterhin eine Speichereinheit für eine Energieführungskette, die ein Speichergehäuse und eine darin anordenbare in Form einer Spirale gewickelte Energieführungskette mit den vorstehend beschriebenen Merkmalen umfasst, wobei die spiralförmig gewickelte Energieführungskette zwei in einem Abstand voneinander angeordnete Wickelachsen aufweist. Die Energieführungskette weist an ihrem einen Ende einen im Inneren der spiralförmig gewickelten Energieführungskette stationär im Speichergehäuse angeordneten festen Anschlusspunkt und an ihrem anderen Ende einen beweglichen Anschlusspunkt auf, wobei durch Verfahren des beweglichen Anschlusspunktes und dadurch bewirktes Verfahren der Energieführungskette der Abstand der Wickelachsen voneinander zwischen einem Minimalabstand und einem Maximalabstand veränderbar ist.

Eine derartige Speichereinheit eignet sich insbesondere für sich relativ lang erstreckende zur Verfügung stehende Speicherräume für eine Energieführungskette, wobei der Maximalabstand zwischen den Wickelachsen der spiralförmig gewickelten Leitungsführung relativ groß gewählt werden kann und die Energieführungskette sich in ihrem maximal eingefahrenen Zustand im Speichergehäuse über relativ lange Trume erstrecken kann.

Bei einer bevorzugten Ausführung der Speichereinheit ist der feste Anschlusspunkt in dem auf die Erstreckung des Speichergehäuses in Längsrichtung bezogenen mittleren Bereich des Speichergehäuses angeordnet.

Gemäß einer alternativen Ausführung kann durch eine Abstützung der sich um eine der beiden Wickelachsen erstreckenden Führungselemente, insbesondere der Führungselemente, deren Außenseiten im Speichergehäuse in Richtung auf den beweglichen Anschlusspunkt weisen, stationär gehalten werden. Der feste Anschlusspunkt ist in diesem Falle in den Bereich der stationär gehaltenen Führungselemente bzw. der stationären Wickelachse, gegenüber dem vorstehend beschriebenen Ausführungsbeispiel zu verlegen. Die maximal gespeicherte Länge der Energieführungskette kann in diesem Falle gegenüber dem vorstehend beschriebenen Ausführungsbeispiel um etwa die Hälfte des Maximalabstands zwischen den Wickelachsen verlängert werden. Beim vollständigen Herausziehen der Energieführungskette aus dem Speichergehäuse steht somit auch ein um etwa die Hälfte des Maximalabstands längerer Abschnitt der Energieführungskette zum beweglichen Anschlusspunkt zur Verfügung. Diese alternative Ausführung hat jedoch den Nachteil, dass die Trume der Energieführungskette, wie im Folgenden beschrieben, im mittleren Bereich des Speichergehäuses nicht abgestützt werden können.

Aufgrund der die Umlenkbereiche längs der Umlenkbögen führenden Führungselemente der spiralförmig gewickelten Energieführungskette kann diese mit einer relativ geringen Zugkraft auf das mit dem beweglichen Anschlusspunkt verbundene Trum aus dem Speichergehäuse herausgezogen und mit einer relativ geringen Druckkraft auf das mit dem beweglichen Anschlusspunkt verbundene Trum in dessen Längsrichtung in das Speichergehäuse eingeführt werden. Durch die erfindungsgemäße Führung der Umlenkbereiche durch die an ihrer jeweiligen Innenseite und ihrer jeweiligen Außenseite angeordneten, sich bogenförmig um die jeweilige Achse des Umlenkbogens erstreckenden Führungselemente entstehen in den Umlenkbereichen beim Herausziehen und Einführen der Energieführungskette in das Speichergehäuse nur geringe Reibkräfte. Die Zug- und Druckkraft kann gegebenenfalls manuell auf das mit dem beweglichen Anschlusspunkt verbundene und sich aus dem Speichergehäuse herauserstreckende Trum ausgeübt werden.

Die vorstehend beschriebene erfindungsgemäße Speichereinheit bedarf keiner Vorspannung der Wickelachsen und damit der die Umlenkbereiche führenden Führungselemente in eine Position, in der die Wickelachsen ihren Maximalabstand erreichen. Die Erzeugung einer solchen Vorspannung würde einen zusätzlichen konstruktiven Aufwand für das Speichergehäuse bedeuten.

Bei Anordnung des festen Anschlusspunktes im mittleren Bereich des Speichergehäuses können Führungseinrichtungen zur Abstützung und Führung der Trume der Energieführungskette im Speichergehäuse vorgesehen sein.

Sind die sich um eine Wickelachse erstreckenden Führungselemente gemäß dem oben beschriebenen Ausführungsbeispiel für die Energieführungskette in einem Gehäuse angeordnet, kann das Gehäuse in Längsrichtung der Trume bei Veränderung des Abstands der Wickelachsen am Speichergehäuse, insbesondere gleitend, geführt werden.

Das Speichergehäuse kann zwei parallele Seitenplatten aufweisen, die parallel zu den Umlenkbögen der Umlenkbereiche der Energieführungskette angeordnet sind und sich in Längsrichtung der Trume über die Umlenkbereiche der Energieführungskette an beiden Wickelachsen erstrecken. Der bewegliche Anschlusspunkt kann außerhalb des Speichergehäuses angeordnet sein.

Die plattenförmigen Teile des die sich um eine Wickelachse erstreckenden Führungselemente enthaltenden Gehäuses können außen angeformte Führungsvorsprünge aufweisen, die in sich in Längsrichtung der Trume erstreckende Nuten oder Öffnungen in den Seitenplatten des Speichergehäuses eingreifen.

Im mittleren Bereich der Längserstreckung der Seitenplatten des Speichergehäuses können an deren nach innen weisenden Flächen Führungsvorsprünge zur Abstützung und Führung der Trume der Energieführungskette im Speichergehäuse vorgesehen sein.

Angrenzend an den Bereich des festen Anschlusspunktes kann zumindest in einer Seitenplatte des Speichergehäuses eine Öffnung zum Durchführen der beim festen Anschlusspunkt aus der Energieführungskette heraustretenden Leitungen vorgesehen sein.

Das Speichergehäuse kann an den stirnseitigen Enden der Seitenplatten Stirnplatten und diese miteinander verbindende obere und untere Abschlussplatten aufweisen.

Die obere und untere Abschlussplatten können derart angeordnet sein, dass sie das obere bzw. untere Trum der im Speichergehäuse angeordneten Energieführungskette gleitend führen.

Das Speichergehäuse kann aus zwei Gehäuseschalen gebildet sein, deren Trennfläche in einer Ebene liegt, die sich parallel zu den Umlenkbögen der Umlenkbereiche der Energieführungskette erstreckt.

Eine der Stirnplatten kann im oberen oder unteren Bereich eine Durchführöffnung für das mit dem beweglichen Anschlusspunkt verbundene Trum der Energieführungskette aufweisen.

Ein Ausführungsbeispiel der vorliegenden Erfindung wird im Folgenden anhand der Zeichnung näher beschrieben.

In der Zeichnung zeigen:
- Figur 1: eine auseinandergezogene perspektivische Darstellung einer Speichereinheit für eine Energieführungskette,
- Figur 2: eine seitliche Ansicht der aus dem Speichergehäuse der Speichereinheit maximal ausgefahrenen Energieführungskette mit minimalem Abstand der Wickelachsen,
- Figur 3: eine seitliche Ansicht der in das Speichergehäuse der Speichereinheit maximal eingefahrenen Energieführungskette mit maximalem Abstand der Wickelachsen und
- Figur 4: eine stirnseitige Ansicht in Richtung des Pfeils A in Figur 3.

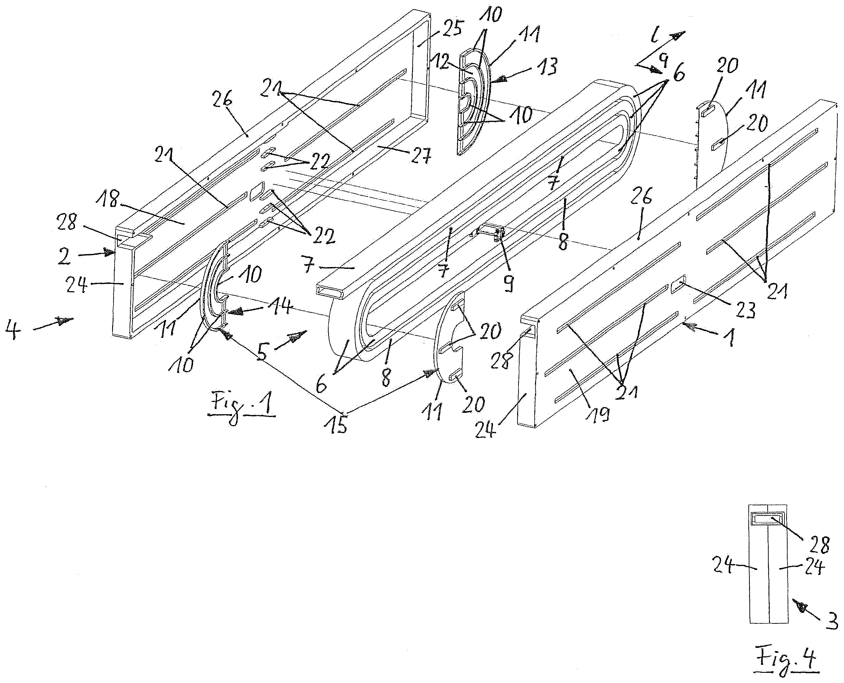

Wie aus Figur 1 hervorgeht, ist in einem durch zwei Gehäuseschalen 1, 2 gebildeten Speichergehäuse 3 einer Speichereinheit 4 eine Energieführungskette 5 angeordnet, die in Form einer Spirale um zwei voneinander beabstandete Wickelachsen gewickelt ist. Die Energieführungskette 5 weist mehrere sich um die Wickelachsen erstreckende Umlenkbereiche 6 auf, an die Trume 7, 8 der Energieführungskette 5 anschließen. Die Umlenkbögen der Umlenkbereiche 6, die sich um die gleiche Wickelachse erstrecken, sind konzentrisch zueinander angeordnet.

Die Energieführungskette 5 weist an ihrem im Inneren der spiralförmigen Wicklung angeordneten Ende einen festen Anschlusspunkt 9 und an ihrem anderen Ende einen (in der Zeichnung nicht dargestellten) beweglichen Anschlusspunkt auf.

Zur Führung der Umlenkbereiche 6 beim Verfahren der Energieführungskette 5 sind Führungselemente 10 vorgesehen, die sich an den Innen- und Außenseiten bogenförmig um die jeweilige Wickelachse der Umlenkbereiche 6 erstrecken. Wie in Figur 1 gezeigt ist, sind die Führungselemente 10 bandförmig ausgebildet und erstrecken sich über einen Kreisbogen an den Innen- und Außenseiten der Umlenkbereiche 6.

Die Führungselemente 10 für die Umlenkbereiche 6, die sich um die gleiche Wickelachse erstrecken, sind konzentrisch zueinander angeordnet.

Die Führungselemente 10 für die Umlenkbereiche 6, die sich um die gleiche Wickelachse erstrecken sind seitlich an einem plattenförmigen Teil 11 angeordnet, das außenseitig parallel zur Ebene der Umlenkbereiche 6 angeordnet und in Gestalt einer im Wesentlichen halbkreisförmigen Platte ausgebildet ist. Die bandförmigen Führungselemente 10 erstrecken sich in Querrichtung zur Längsrichtung l etwa über die halbe Breite der Energieführungskette 5. Die Innenseite 12 des plattenförmigen Teils 11 dient dabei als Gleitführung der Umlenkbereiche 6.

Wie weiterhin aus Figur 1 hervorgeht, bilden zwei derartige halbkreisförmige plattenförmige Teile 11 mit daran angeformten Führungselementen 10 Gehäuseschalen 13, 14 eines Gehäuses 15, das die sich um die jeweilige Wickelachse erstreckenden Umlenkbereiche 6 der Energieführungskette 5 gleitführend aufnimmt.

Wie ebenfalls aus Figur 1 hervorgeht, wird das Speichergehäuse 3 durch zwei Gehäusehälften 16, 17 gebildet. Die Gehäusehälften 16, 17 weisen jeweils eine Seitenplatte 18 bzw. 19 auf, die sich in Längsrichtung l der Trume 7, 8 der Energieführungskette 5 über die Umlenkbereiche 6 an beiden Wickelachsen erstreckt. An den Seitenplatten 18, 19 werden die beiden Gehäuse 15, die die sich jeweils um eine Wickelachse erstreckenden Umlenkbereiche 6 aufnehmen, seitlich gleitend geführt. Dazu weisen die plattenförmigen Teile 11 des jeweiligen Gehäuses 15 außen angeformte Führungsvorsprünge 20 auf, die in sich in Längsrichtung l der Trume 7, 8 erstreckende Nuten 21 der Seitenplatten 18, 19 eingreifen.

Im mittleren Bereich der Längserstreckung der Seitenplatten 18, 19 des Speichergehäuses 3 sind an deren nach innen weisenden Flächen Führungsvorsprünge 22 zur Abstützung und Führung der Trume 7, 8 der Energieführungskette 5 angeformt.

Angrenzend an den Bereich des festen Anschlusspunktes 9 ist in beiden Seitenplatten 18, 19 des Speichergehäuses 3 eine Öffnung 23 zum Durchführen der beim festen Anschlusspunkt 9 aus der Energieführungskette 1 heraustretenden (in der Zeichnung nicht gezeigten) Leitungen vorgesehen.

Das Speichergehäuse 3 weist an den stirnseitigen Enden der Seitenplatten 18, 19 Stirnplatten 24, 25 und diese miteinander verbindende obere und untere Abschlussplatten 26, 27 auf. Die Abschlussplatten 26, 27 sind so angeordnet, dass sie den radial nach außen weisenden oberen und unteren Rand des vom beweglichen Anschlusspunkt entfernter liegenden Gehäuses 15 gleitend führen. Das zum beweglichen Anschlusspunkt näher liegende Gehäuse 15 wird an seinem unteren und oberen Rand zwischen der unteren Abschlussplatte 27 und dem mit dem beweglichen Anschlusspunkt verbundenen Trum 7 gleitend geführt.

Die zum beweglichen Anschlusspunkt hin weisenden Stirnplatten 24 der beiden Gehäuseschalen 13, 14 weisen in ihrem oberen Bereich eine Durchführöffnung 28 für das mit dem beweglichen Anschlusspunkt verbundene Trum 7 der Energieführungskette 1 auf.

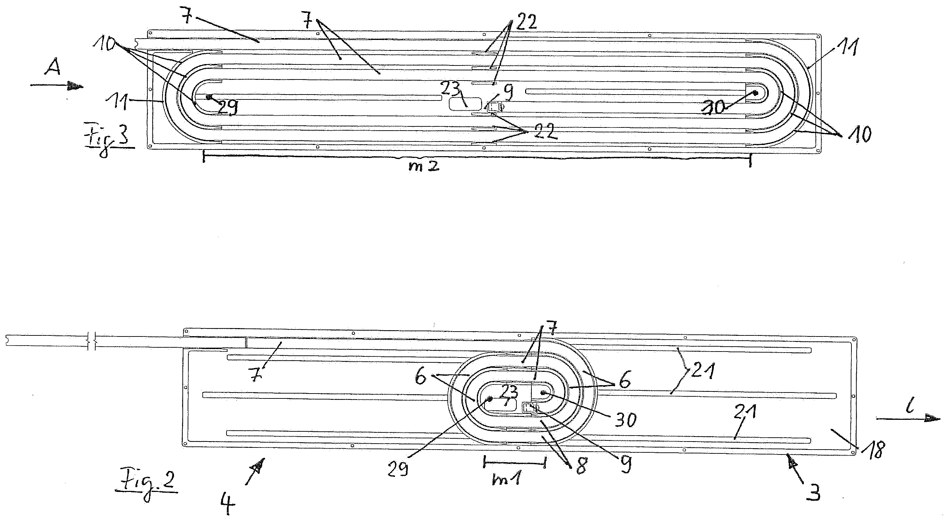

Figur 2 zeigt die Anordnung der spiralförmig gewickelten Energieführungskette 1 in ihrer im Speichergehäuse 3 maximal eingefahrenen Position. In dieser Position mit Minimalabstand m1 der beiden Wickelachsen 29, 30 liegen die geraden Stirnseiten der halbkreisförmigen plattenförmigen Teile 11 der Gehäuse 15 und die freien Enden der darin angeordneten bogenförmigen Führungselemente 10 stirnseitig an den Führungsvorsprünge 22 der Gehäusehälften 16, 17 des Speichergehäuses 3 an und legen somit den Minimalabstand m1 zwischen den Wickelachsen 29, 30 fest.

Wird die Energieführungskette 5 durch Druckbeaufschlagung auf den beweglichen Anschlusspunkt und das mit diesem verbundenen Trum 7 in das Speichergehäuse 3 eingefahren, wandern die beiden die Umlenkbereiche 6 aufnehmenden Gehäuse 15 in zueinander entgegengesetzten Richtungen vermöge der durch den Druck der Umlenkbereiche 6 auf die Gehäuse 15 ausgeübten Kräfte, wobei sich die spiralförmige Wicklung in Längsrichtung des Speichergehäuses 3 weitet und sich der Abstand zwischen den Wickelachsen 29, 30 vergrößert bis die Gehäuse 15 im Bereich der Stirnplatten 24, 25 des Speichergehäuses 3 anschlagen und, wie in Figur 3 gezeigt, der Maximalabstand m2 zwischen den Wickelachsen 29, 30 erreicht ist.

### Bezugszeichenliste

- 1: Gehäuseschale
- 2: Gehäuseschale
- 3: Speichergehäuse
- 4: Speichereinheit
- 5: Energieführungskette
- 6: Umlenkbereich
- 7: Trum
- 8: Trum
- 9: fester Anschlusspunkt
- 10: Führungselement
- 11: plattenförmiges Teil
- 12: Innenseite
- 13: Gehäuseschale
- 14: Gehäuseschale
- 15: Gehäuse
- 16: Gehäusehälfte
- 17: Gehäusehälfte
- 18: Seitenplatte
- 19: Seitenplatte

- 20: Führungsvorsprung
- 21: Nut
- 22: Führungsvorsprung
- 23: Öffnung
- 24: Stirnplatte
- 25: Stirnplatte
- 26: Abschlussplatte
- 27: Abschlussplatte
- 28: Durchgangsöffnung
- 29: Wickelachse
- 30: Wickelachse
- 31: Wickelachse
- l: Längsrichtung
- q: Querrichtung
- m1: Minimalabstand
- m2: Maximalabstand

## Patentansprüche

1. Führungselemente (10) und Energieführungskette (5) zur Aufnahme und Führung von Energie- und/oder Kommunikationsleitungen, die verschwenkbar in Längsrichtung aneinander anschließende Kettenglieder aufweist, wobei die Kettenglieder jeweils zwei in einer Querrichtung (q) zur Längsrichtung (l) gegenüberliegende Seitenteile umfassen und zumindest einige der Kettenglieder ihre Seitenteile verbindende Traversen aufweisen, wobei die Energieführungskette (1) mehrere Abschnitte einschließt, die jeweils in Form von zwei durch einen sich um einen Umlenkbogen erstreckenden Umlenkbereich (6) miteinander verbundenen Trumen (7, 8) angeordnet sind, **dadurch gekennzeichnet, dass** die Energieführungskette (1) um den Umlenkbogen verfahrbar ist und jeder Umlenkbereich (6) der mehreren Abschnitte an seiner Innenseite und seiner Außenseite durch sich bogenförmig um die jeweilige Achse des Umlenkbogens erstreckende Führungselemente (10) geführt ist.

2. Führungselemente (10) und Energieführungskette (5) nach Anspruch 1, **dadurch gekennzeichnet, dass** sich die Führungselemente (10) in Querrichtung (q) über die gesamte Breite des Umlenkbereichs (6) erstrecken.

3. Führungselemente (10) und Energieführungskette (5) nach Anspruch 1 oder 2, **dadurch gekennzeichnet, dass** die Führungselemente (10) durch Kulissen gebildet sind, die jeweils mit Wandbereichen den Umlenkbereich (6) an seiner Innenseite und/oder Außenseite gleitend führen.

4. Führungselemente (10) und Energieführungskette (5) nach einem der Ansprüche 1-3, **dadurch gekennzeichnet, dass** zumindest einige der mehreren Abschnitte der Energieführungskette (5) miteinander über ein Trum oder beide Trume (7, 8) miteinander verbunden sind.

5. Führungselemente (10) und Energieführungskette (5) nach Anspruch 4, **dadurch gekennzeichnet, dass** sie gewickelt in Form einer Spirale mit zwei voneinander beabstandeten Wickelachsen (29, 30) angeordnet ist, um die sich die Umlenkbögen der Umlenkbereiche (6) der Energieführungskette (5) erstrecken.

6. Führungselemente (10) und Energieführungskette (5) nach Anspruch 5, **dadurch gekennzeichnet, dass** die Umlenkbögen der Umlenkbereiche (6), die sich um die gleiche Wickelachse (29, 30) erstrecken, und die Führungselemente (10) für die Umlenkbereiche (6), deren Umlenkbögen sich um die gleiche Wickelachse (29, 30) erstrecken, konzentrisch zueinander angeordnet sind.

7. Führungselemente (10) und Energieführungskette (5) nach Anspruch 6, **dadurch gekennzeichnet, dass** die konzentrisch zueinander angeordneten Führungselemente (10) sich bandförmig zwischen den Umlenkbereichen (6) erstrecken.

8. Führungselemente (10) und Energieführungskette (5) nach Anspruch 6, **dadurch gekennzeichnet, dass** die konzentrisch zueinander angeordneten Führungselemente (10) durch Wandbereiche einer Kulisse gebildet sind, die die sich um die jeweilige Wickelachse (29, 30) erstreckenden Umlenkbereiche (6) an ihrer jeweiligen Innenseite und/oder Außenseite gleitend führt.

9. Führungselemente (10) und Energieführungskette (5) nach einem der Ansprüche 6-8, **dadurch gekennzeichnet, dass** die konzentrisch zueinander angeordneten Führungselemente (10) seitlich an einem plattenförmigen Teil (11) angeordnet sind, das sich außenseitig parallel zu der Ebene der Umlenkbögen der Umlenkbereiche (6) erstreckt.

10. Speichereinheit (4) mit einem Speichergehäuse (3) und einer darin angeordneten in Form einer Spirale gewickelten Energieführungskette (5) und Führungselemente (10) nach einem der Ansprüche 5-9, wobei die spiralförmig gewickelte Energieführungskette (5) zwei in einem Abstand voneinander angeordnete Wickelachsen (29, 30) aufweist, um die sich jeweils mindestens ein Umlenkbereich (6) eines Abschnitts der Energieführungskette (5) erstreckt, wobei jeder Umlenkbereich (6) an seiner Innenseite und seiner Außenseite durch sich bogenförmig konzentrisch um die jeweilige Wickelachse (29, 30) erstreckende im Speichergehäuse angeordnete Führungselemente (10) geführt ist, und die Energieführungskette an ihrem einen Ende einen im Inneren der spiralförmig gewickelten Energieführungskette (5) stationär im Speichergehäuse angeordneten festen Anschlusspunkt (9) und an ihrem anderen Ende einen beweglichen Anschlusspunkt aufweist, wobei durch Verfahren des beweglichen Anschlusspunktes und dadurch bewirktes Verfahren der Energieführungskette (5) der Abstand der Wickelachsen (29, 30) voneinander zwischen einem Minimalabstand (m1) und einem Maximalabstand (m2) veränderbar ist.

11. Speichereinheit (4) nach Anspruch 10, **dadurch gekennzeichnet, dass** zwischen den sich um die eine der beiden Wickelachsen (29, 30) erstreckenden Umlenkbereichen (6), einerseits, und den sich um die andere der beiden Wickelachsen (29, 30) erstreckenden Umlenkbereichen (6), andererseits, keine eine Veränderung des Abstands der beiden Wickelachsen (29, 30) zu ihrem Maximalabstand (m2) hin wirkende Vorspannung vorgesehen ist.

12. Speichereinheit (4) mit einem Speichergehäuse (3) für eine darin anordenbare, in Form einer Spirale wickelbare Energieführungskette (5) und Führungselemente (10) nach einem der Ansprüche 5-9, wobei die spiralförmig wickelbare Energieführungskette (5) zwei in einem Abstand voneinander angeordnete Wickelachsen (29, 30) aufweist, um die sich jeweils mindestens ein Umlenkbereich (6) eines Abschnitts der Energieführungskette (5) erstreckt, wobei jeder Umlenkbereich (6) an seiner Innenseite und seiner Außenseite durch sich bogenförmig konzentrisch um die jeweilige Wickelachse (29, 30) erstreckende im Speichergehäuse angeordnete Führungselemente (10) führbar ist, und die Energieführungskette an ihrem einen Ende einen im Inneren der spiralförmig gewickelten Energieführungskette (5) stationär im Speichergehäuse angeordneten festen Anschlusspunkt (9) und an ihrem anderen Ende einen beweglichen Anschlusspunkt aufweist, wobei durch Verfahren des beweglichen Anschlusspunktes und dadurch bewirktes Verfahren der Energieführungskette (5) der Abstand der Wickelachsen (29, 30) voneinander zwischen einem Minimalabstand (m1) und einem Maximalabstand (m2) veränderbar ist, **dadurch gekennzeichnet, dass** das Speichergehäuse zwei parallele Seitenplatten (18, 19) aufweist, die parallel zu den Umlenkbögen der Umlenkbereiche (6) der Energieführungskette (5) angeordnet sind und sich in Längsrichtung (l) der Trume (7, 8) über die Umlenkbereiche (6) der Energieführungskette (5) an beiden Wickelachsen (29, 20) erstrecken.

13. Speichereinheit (4) nach Anspruch 12, **dadurch gekennzeichnet, dass** im mittleren Bereich der Längserstreckung der Seitenplatten (18, 19) des Speichergehäuses an deren nach innen weisenden Flächen Führungsvorsprünge (22) zur Abstützung und Führung der Trume (7, 8) der Energieführungskette (5) im Speichergehäuse (3) vorgesehen sind.

14. Speichereinheit (4) nach Anspruch 12 oder 13, **dadurch gekennzeichnet, dass** das Speichergehäuse (3) an den stirnseitigen Enden der Seitenplatten (18, 19) Stirnplatten (24, 25) und diese miteinander verbindende obere und untere Anschlussplatten (26, 27) aufweist.

15. Speichereinheit (4) nach Anspruch 14, **dadurch gekennzeichnet, dass** die obere und untere Abschlussplatte derart angeordnet sind, dass sie die beiden Gehäuse (15) gleitend daran führen.

16. Speichereinheit (4) nach Anspruch 14 oder 15, **dadurch gekennzeichnet, dass** eine der Stirnplatten (24, 25) im oberen oder unteren Bereich eine Durchführöffnung (28) für das mit dem beweglichen Anschlusspunkt verbundene Trum (7) der Energieführungskette (5) aufweist.

## Claims

1. Guide elements (10) and energy chain (5), for receiving and guiding energy and/or communication cables, which has chain links pivotably adjoining one another in the longitudinal direction, wherein the chain links comprise in each case two side parts lying opposite one another in a transverse direction (q) relative to the longitudinal direction (l) and at least some of the chain links have cross members connecting their side parts, wherein the energy chain (1) includes several portions which are each arranged in the form of two strands (7, 8) connected to one another by a deflection region (6) extending about a deflection arc, **characterized in that** the energy chain (1) is movable about the deflection arc and each deflection region (6) of the several portions is guided on its inner face and its outer face by guide elements (10) extending an arc-shaped manner about the respective axis of the deflection arc.

2. Guide elements (10) and energy chain (5) according to claim 1, **characterized in that** the guide elements (10) extend over the entire width of the deflection region (6) in the transverse direction (q).

3. Guide elements (10) and energy chain (5) according to claim 1 or 2, **characterized in that** the guide elements (10) are formed by slide blocks, which in each case guide the deflection region (6) on its inner face and/or outer face in a sliding manner with wall regions.

4. Guide elements (10) and energy chain (5) according to one of claims 1-3, **characterized in that** at least some of the several portions of the energy chain (5) are connected to one another via one strand or both strands (7, 8).

5. Guide elements (10) and energy chain (5) according to claim 4,**characterized in that** it is arranged wound in the shape of a helix with two winding axes (29, 30) spaced apart from one another, about which the deflection arcs of the deflection regions (6) of the energy chain (5) extend.

6. Guide elements (10) and energy chain (5) according to claim 5, **characterized in that** the deflection arcs of the deflection regions (6) which extend about the same winding axis (29, 30) and the guide elements (10) for the deflection regions (6) the deflection arcs of which extend about the same winding axis (29, 30) are arranged concentrically with one another.

7. Guide elements (10) and energy chain (5) according to claim 6, **characterized in that** the guide elements (10) which are arranged concentrically with each other extend in the shape of a strip between the deflection regions (6).

8. Guide elements (10) and energy chain (5) according to claim 6, **characterized in that** the guide elements (10) which are arranged concentrically with one another are formed by wall regions of a slide block which guides the deflection regions (6) on their respective inner face and/or outer face in a sliding manner.

9. Guide elements (10) and energy chain (5) according to one of claims 6-8, **characterized in that** the guide elements (10) arranged concentrically with one another are arranged laterally on a plate-shaped part (11), which extends externally parallel to the plane of the deflection arcs of the deflection regions (6).

10. Storage unit (4), which comprises a storage housing (3) and an energy chain (5) that is arranged therein and wound in the shape of a helix, and guide elements (10) according to one of claims 5-9, wherein the helically wound energy chain (5) has two winding axes (29, 30) arranged with a spacing from one another about which in at least one deflection region (6) in each case of a portion of the energy chain (5) extends, wherein each deflection region (6) is guided on its inner face and on its outer face by guide elements (10) extending in arc-shaped manner concentrically about the respective winding axis (29, 30) and arranged in the storage housing, and wherein the energy chain has a fixed connection point (9) arranged stationarily in the storage housing in the interior of the helically wound energy chain (5) at one of its ends and a movable connection point at its other end, wherein, by movement of the movable connection point and movement caused thereby of the energy chain (5), the spacing of the winding axes (29, 30) from one another is variable between a minimum spacing (m1) and a maximum spacing (m2).

11. Storage unit (4) according to claim 10, **characterized in that** no pretensioning causing a variation of the spacing of the two winding axes (29, 30) towards their maximum spacing (m2) is provided between the deflection regions (6) extending about one of the two winding axes (29, 30) on the one hand and the deflection regions (6) extending about the other of the two winding axes (29, 30) on the other hand.

12. Storage unit (4), which comprises a storage housing (3) for an energy chain (5) that is arrangeable therein and wound in the shape of a helix, and guide elements (10) according to one of claims 5-9, wherein the helically wound energy chain (5) has two winding axes (29, 30) arranged with a spacing from one another about which in at least one deflection region (6) in each case of a portion of the energy chain (5) extends, wherein each deflection region (6) is guidable on its inner face and on its outer face by guide elements (10) extending in arc-shaped manner concentrically about the respective winding axis (29, 30) and arranged in the storage housing, and wherein the energy chain has a fixed connection point (9) arranged stationarily in the storage housing in the interior of the helically wound energy chain (5) at one of its ends and a movable connection point at its other end, wherein, by movement of the movable connection point and movement caused thereby of the energy chain (5), the spacing of the winding axes (29, 30) from one another is variable between a minimum spacing (m1) and a maximum spacing (m2), **characterized in that** the storage housing comprises two parallel side plates (18, 19) arranged parallel to the deflection arcs of the deflection regions (6) of the energy chain (5) and extend in the longitudinal direction of the strands (7, 8) over the deflection regions (6) of the energy chain (5) on both winding axes (29, 30).

13. Storage unit (4) according to claim 12, **characterized in that** in the central region of the longitudinal extension of the side plates (18, 19) of the storage housing, guide projections (22) are provided on their inwardly facing surfaces to support and guide the strands (7, 8) of the energy chain (5) in the storage housing (3).

14. Storage unit (4) according to claim 12 or 13, **characterized in that** at the face-side ends of the side plates (18, 19) the storage housing (3) has face plates (24, 25) and upper and lower closing plates (26, 27) connecting these to one another.

15. Storage unit (4) according to claim 14, **characterized in that** the upper and lower closing plates are arranged such that they guide the two housings (15) in a sliding manner thereon.

16. Storage unit (4) according to claim 14 or 15, **characterized in that** in the upper or lower region one of the face plates (24, 25) has a feed-through opening (28) for the strand (7) of the energy chain (5) connected to the movable connection point.

## Revendications

1. Éléments de guidage (10) et chaîne porte-câbles (5), destinés à recevoir et à guider des câbles d'énergie et/ou de communication, la chaîne porte-câbles comportant des maillons de chaîne reliés entre eux de manière pivotante dans la direction longitudinale, les maillons de chaîne comprenant chacun deux parties latérales situées en vis-à-vis dans une direction transversale (q) par rapport à la direction longitudinale (l) et au moins certains des maillons de chaîne comportant des traverses reliant leurs parties latérales, la chaîne porte-câbles (1) comprenant plusieurs sections qui sont chacune agencées sous la forme de deux brins (7, 8) reliés entre eux par une zone de déviation (6) s'étendant autour d'un arc de déviation, **caractérisés en ce que** la chaîne porte-câbles (1) est mobile autour de l'arc de déviation et que chaque zone de déviation (6) des différentes sections est guidée, sur sa face interne et sa face externe, par des éléments de guidage (10) s'étendant en forme d'arc autour de l'axe respectif de l'arc de déviation.

2. Éléments de guidage (10) et chaîne porte-câbles (5) selon la revendication 1, **caractérisés en ce que** les éléments de guidage (10) s'étendent sur toute la largeur de la zone de déviation (6) dans la direction transversale (q).

3. Éléments de guidage (10) et chaîne porte-câbles (5) selon la revendication 1 ou 2, **caractérisés en ce que** les éléments de guidage (10) sont formés par des blocs coulissants qui, dans chaque cas, guident la zone de déviation (6) sur sa face intérieure et/ou sa face extérieure de manière glissante par l'intermédiaire des zones de paroi.

4. Éléments de guidage (10) et chaîne porte-câbles (5) selon l'une quelconque des revendications 1 à 3, **caractérisés en ce qu'**au moins certaines des différentes sections de la chaîne porte-câbles (5) sont reliées les unes aux autres par l'intermédiaire d'un brin ou des deux brins (7, 8).

5. Éléments de guidage (10) et chaîne porte-câbles (5) selon la revendication 4, **caractérisés en ce qu'**ils sont agencés en forme d'hélice avec deux axes d'enroulement (29, 30) espacés l'un de l'autre, autour desquels s'étendent les arcs de déviation des zones de déviation (6) de la chaîne porte-câbles (5).

6. Éléments de guidage (10) et chaîne porte-câbles (5) selon la revendication 5, **caractérisés en ce que** les arcs de déviation des zones de déviation (6), qui s'étendent autour d'un même axe d'enroulement (29, 30), et les éléments de guidage (10) destinés aux zones de déviation (6), dont les arcs de déviation s'étendent autour d'un même axe d'enroulement (29, 30), sont disposés de manière concentrique les uns par rapport aux autres.

7. Éléments de guidage (10) et chaîne porte-câbles (5) selon la revendication 6, **caractérisés en ce que** les éléments de guidage (10) disposés de manière concentrique les uns par rapport aux autres s'étendent sous la forme d'une bande entre les zones de déviation (6).

8. Éléments de guidage (10) et chaîne porte-câbles (5) selon la revendication 6, **caractérisés en ce que** les éléments de guidage (10), qui sont disposés de manière concentrique les uns par rapport aux autres, sont formés par des zones de paroi d'un bloc coulissant qui guide les zones de déviation (6) sur leur face intérieure et/ou leur face extérieure respective de manière glissante.

9. Éléments de guidage (10) et chaîne porte-câbles (5) selon l'une quelconque des revendications 6 à 8, **caractérisés en ce que** les éléments de guidage (10), disposés de manière concentrique les uns par rapport aux autres, sont agencés latéralement sur une pièce en forme de plaque (11), qui s'étend à l'extérieur parallèlement au plan des arcs de déviation des zones de déviation (6).

10. Unité de stockage (4), qui comprend un boîtier de stockage (3) et une chaîne porte-câbles (5) disposée à l'intérieur de celui-ci et enroulée en forme d'hélice, ainsi que des éléments de guidage (10) selon l'une quelconque des revendications 5 à 9, dans laquelle la chaîne porte-câbles (5) enroulée en forme d'hélice présente deux axes d'enroulement (29, 30) espacés l'un de l'autre, autour desquels s'étend, dans au moins une zone de déviation (6), une partie respective de la chaîne porte-câbles (5), chaque zone de déviation (6) étant guidée sur sa face interne et sur sa face externe par des éléments de guidage (10) s'étendant de manière concentrique en forme d'arc autour de l'axe d'enroulement respectif (29, 30) et disposés dans le boîtier de stockage, et dans laquelle la chaîne porte-câbles comporte un point de raccordement fixe (9) disposé de manière stationnaire dans le boîtier de stockage à l'intérieur de la chaîne porte-câbles enroulée en forme d'hélice (5) à l'une de ses extrémités et un point de raccordement mobile à son autre extrémité, dans laquelle, par le mouvement du point de raccordement mobile et le mouvement ainsi provoqué de la chaîne porte-câbles (5), l'écart entre les axes d'enroulement (29, 30) est variable entre un écart minimal (m1) et un écart maximal (m2).

11. Unité de stockage (4) selon la revendication 10, **caractérisée en ce qu'**aucune précontrainte provoquant une variation de l'écart entre les deux axes d'enroulement (29, 30) vers leur espacement maximal (m2) n'est prévu entre, d'une part, les zones de déviation (6) s'étendant autour de l'un des deux axes d'enroulement (29, 30) et, d'autre part, les zones de déviation (6) s'étendant autour de l'autre des deux axes d'enroulement (29, 30).

12. Unité de stockage (4), qui comprend un boîtier de stockage (3) destiné à une chaîne porte-câbles (5) pouvant y être disposée et enroulée en forme d'hélice, ainsi que des éléments de guidage (10) selon l'une quelconque des revendications 5 à 9, dans laquelle la chaîne porte-câbles (5) enroulée en forme d'hélice présente deux axes d'enroulement (29, 30) espacés l'un de l'autre, autour desquels s'étend, dans au moins une zone de déviation (6), une partie de la chaîne porte-câbles (5), chaque zone de déviation (6) pouvant être guidée sur sa face interne et sur sa face externe par des éléments de guidage (10) s'étendant de manière concentrique en forme d'arc autour de l'axe d'enroulement respectif (29, 30) et disposés dans le boîtier de stockage, et dans laquelle la chaîne porte-câbles comporte un point de raccordement fixe (9) disposé de manière stationnaire dans le boîtier de stockage à l'intérieur de la chaîne porte-câbles enroulée en forme d'hélice (5) à l'une de ses extrémités et un point de raccordement mobile à son autre extrémité, dans laquelle, par le déplacement du point de raccordement mobile et le déplacement de la chaîne porte-câbles (5) ainsi provoqué, l'écartement entre les axes d'enroulement (29, 30) est variable entre un écartement minimal (m1) et un écartement maximal (m2), **caractérisé en ce que** le boîtier de stockage comprend deux plaques latérales parallèles (18, 19) disposées parallèlement aux arcs de déviation des zones de déviation (6) de la chaîne porte-câbles (5) et s'étendant dans la direction longitudinale des brins (7, 8) sur les zones de déviation (6) de la chaîne porte-câbles (5) sur les deux axes d'enroulement (29, 30).

13. Unité de stockage (4) selon la revendication 12, **caractérisée en ce que**, dans la zone centrale de l'étendue longitudinale des plaques latérales (18, 19) du boîtier de stockage, des saillies de guidage (22) sont prévues sur leurs surfaces tournées vers l'intérieur pour soutenir et guider les brins (7, 8) de la chaîne porte-câbles (5) dans le boîtier de stockage (3).

14. Unité de stockage (4) selon la revendication 12 ou 13, **caractérisée en ce qu'**au niveau des extrémités frontales des plaques latérales (18, 19), le boîtier de stockage (3) comporte des plaques frontales (24, 25) ainsi que des plaques de fermeture supérieure et inférieure (26, 27) reliant celles-ci entre elles.

15. Unité de stockage (4) selon la revendication 14, **caractérisée en ce que** les plaques de fermeture supérieure et inférieure sont agencées de manière à guider les deux boîtiers (15) en coulissement sur celles-ci.

16. Unité de stockage (4) selon la revendication 14 ou 15, **caractérisée en ce que**, dans la zone supérieure ou inférieure, l'une des plaques frontales (24, 25) comporte une ouverture de passage (28) pour le brin (7) de la chaîne porte-câbles (5) relié au point de raccordement mobile.
